# EUROPEAN PATENT APPLICATION

(11) **EP 2 905 523 A1**
(43) Date of publication of application: **12.08.2015**
(21) Application number: 12816681.6
(22) Date of filing: 03.10.2012
(51) Int. Cl.: F16M 11/04, F16M 11/40, F16M 13/02, F16M 13/00

(54) **DEVICE FOR ATTACHING MOBILE TELEPHONES, TABLET COMPUTERS, NAVIGATORS AND OTHER ELECTRONIC APPARATUSES INSIDE OF VEHICLES**

(71) Applicant: Sotillo Silvan, Jesús, 28906 Getafe (ES); De Blas Llorente, Carlos, 28053 Madrid (ES)
(72) Inventor: Sotillo Silvan, Jesús, 28906 Getafe (ES); De Blas Llorente, Carlos, 28053 Madrid (ES)
(74) Representative: Monzón de la Flor, Luis Miguel
(86) International application number: PCT/ES2012/070683
(87) International publication number: WO 2014/053671

(57) **Abstract**

Device comprising: A fixing part (1) for fixing to a rod, fixing means for fixing to the electronic apparatus, which may be a suction pad or similar, a connection arm (2) configurable in its length and which is fixed by one end to the fixing part (1) for fixing to a rod and by the other to the fixing means for fixing to the electronic apparatus, having at its ends complementary fixing means, which may be threaded means. The device achieves the possibility of being able to fix electronic apparatus on rods, such as those of headrests and accessorily they can also configure the final length of the connection arm between the fixing to a rod and the suction pad or fixing means for fixing to the electronic apparatus.

## Description

### OBJECT OF THE INVENTION

An object of the present invention, as the title of the invention establishes, is a fixing device for the fixing in the interior of vehicles of mobile phones, electronic tablets, sat navs and other electronic apparatus, it being possible to perform the fixing both on the vehicle windows and on the rods of the headrests, which means its use can be extended to any other glass or support element in the form of a rod.

The present invention is characterized by the special construction characteristics of each and every one of the parts that form the device so that they enable the assembly and fixing of electronic apparatus, such as mobile phones, electronic tablets, sat navs and other electronic apparatus, in a fixed and secure form.

The device allows the fixing on surfaces made of glass or on elements in rod form and the like, so that they are applicable on the rods of headrests, and thanks to the construction characteristics it is possible to select the support arm length.

Therefore, the present invention is included within the field of support means of electronic apparatus such as mobile phones, electronic tablets, sat navs and other electronic apparatus, in a fixed and secure manner.

### BACKGROUND OF THE INVENTION

Numerous devices or means are known to perform the anchoring or fixing of an electronic apparatus and especially of a mobile telephone to an internal surface of a vehicle.

In this regard, devices can be cited based on a suction pad designed to be fixed to a surface of the motor vehicle and a structure, generally with plastic flanges that fix the electronic apparatus. There are also others that are based on adhesives and magnets.

These systems have several problems: Some are suitable for a single model of electronic apparatus and are usually included with it when it is acquired in the market and it is difficult or impossible to acquire again if necessary to replace it. Others presented as "universal" do not manage to fix with sufficient quality the devices meaning they fall when the vehicle is in motion or simply are only valid for a reduced range of models of electronic apparatus, and almost in no case for apparatus that are not mobile phones.

Others require complicated installation, even being necessary to stick metal sheets to the electronic apparatus to allow them to be later fixed by a magnet to a support which is fixed in turn to the vehicle. In these cases these adhesive metal layers peel off fairly easily meaning the magnet which would be fixed to the car is of no use and mean the metal must continue to be adhered to the mobile terminal or electronic apparatus.

Therefore, an object of the present invention is to develop a fixing device for fixing electronic apparatus, such as tablets, mobile phones and the like, which can be fixed on any part of the interior of vehicles being of universal use for all models and types of electronic apparatus, such as electronic tablets, sat navs and electronic apparatus, developing a device such as that described below and which is essentially set down in claim one.

### DESCRIPTION OF THE INVENTION

An object of the present invention is a fixing device for the fixing in the interior of vehicles of electronic apparatus such as mobile phones, electronic tablets, sat navs and the like.

The fixing can be performed both on glass surfaces and on the rods of the headrests, comprising:
- A first securing element for securing to an element or surface of the vehicle.
- A second fixing element for fixing to the electronic apparatus, the fixing element preferably being a suction pad.
- A connection arm which is fixed at its ends to the securing elements.

Where, both the first securing element and the second have a demountable connection in their joint with the connection arm. The first securing element can be replaced by a securing part for securing to a rod.

The connection arm may be a deformable articulated arm which maintains its position once deformed or it may have a rigid configuration.

The securing part for securing to a rod, in a possible embodiment, has a structure such that is has a through-perforation of configurable section based on displaceable means actuated by clamping threads.

In this way, the securing part for securing to a rod may be used for different sections and forms of rods, since the opening section can be changed by the effect of displacement of the displaceable sheets by actuation of clamping threads.

The fixing element for fixing to the electronic apparatus may be any, preferably being a suction pad, which has a vacuum-generating flange.

The connection arm has at one of its ends a threaded recess in its interior, and at another of its ends a threaded projection, so that by threading, it being possible to use any other fixing means, it is fixed, at one of its ends, on the securing part for securing to a rod, and at the other end, to the securing means of the electronic apparatus.

Thanks to the fact that the arm has complementary fixing means at its ends, it is possible to dispose several similar sections, so that the final length of the connection arm can be configured.

To be able to keep both the securing part for securing to a rod, and the fixing means for fixing the electronic apparatus on the ends of the securing arm fixed, both parts have complementary fixing means, which in the case that they are threaded means, on the fixing part for fixing to a rod they have a threaded projection in the interior, whilst in the fixing part for fixing to the electronic apparatus they have a threaded recess in the interior, and can also be opposite.

Therefore, thanks to the described configuration, a twofold purpose is achieved, on the one hand, in first place and as essential purpose, the possibility of being able to fix electronic apparatus on rods, for which reason it is especially applicable in the headrests of vehicles, and therefore, and as accessory purpose, the fact of being able to configure the final length of the connecting arm between the fixing part for fixing to a rod and the fixing means of the electronic apparatus.

### EXPLANATION OF THE FIGURES

To complement the description being made and in order to aid towards a better understanding of the characteristics of the invention, in accordance with a preferred example of practical embodiment thereof, a set of drawings is attached as an integral part of said description wherein, with illustrative and non-limiting character, the following has been represented.

In figure 1 we can observe a possible configuration of the object of the invention.

In figure 2 we can observe a representation of the device completely assembled and all parts being joined to one another.

Figure 3 shows, on the one hand, a connecting arm and, on the other hand, the fixing between the fixing part for fixing to a rod and the connecting arm.

Figure 4 shows different perspective views of the connecting part to a rod which allows the construction characteristics of said parts to be observed.

### PREFERRED EMBODIMENT OF THE INVENTION

In light of the figures, a preferred embodiment of the proposed invention is described below.

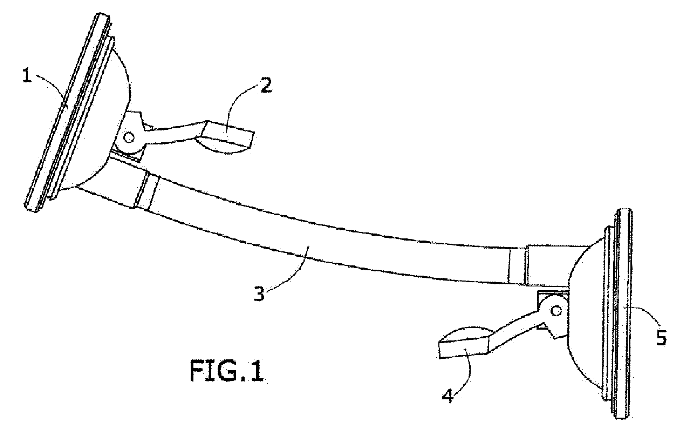

In figure 1 we can observe that the fixing device for fixing in headrests, comprises:
- A first fixing element for fixing to an internal surface or element of the vehicle.
- A second fixing element for fixing to an internal surface or element of the vehicle.
- A connection arm between the first fixing element and the second.

Where, in the case represented in figure 1, the first fixing element is a suction pad (1), the second fixing element is also a suction pad (5), each one of the suction pads (1) and (5) having vacuum-generating flanges (2) and (4).

The connection arm (3), in the embodiment shown, is a deformable articulated arm that can maintain the position once deformed, and can be fixed, as shown in the following figures.

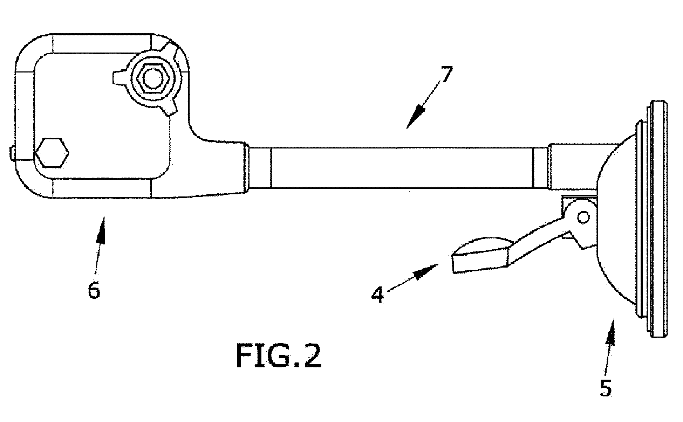

In figure 2, it is observed that the fixing device in the interior of vehicles comprises:
- A first fixing element which is a fixing part (6) for fixing to a rod.
- A second fixing element which is a suction pad (5).
- A connection arm (7) configurable in its length and which is fixed by one end to the fixing part (6) for fixing to a rod and by the other by the fixing means for fixing to the electronic apparatus.

If a suction pad (5) is used as fixing means of the electronic apparatus, this has a flange (4) to generate the vacuum.

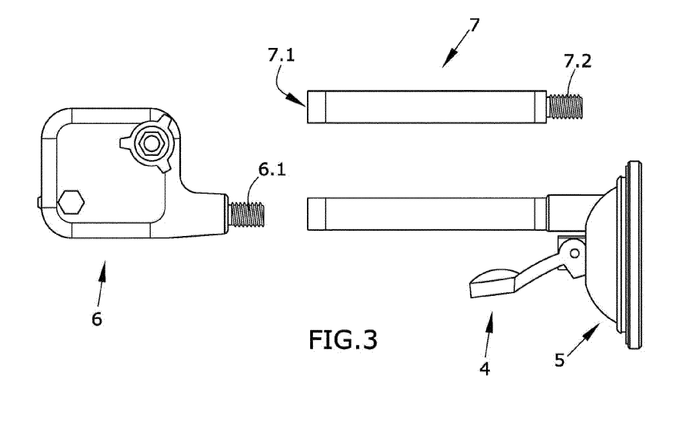

In figure 3, it is observed how the connection arm (7), can be configured by several sections, each section having at its ends complementary fixing means, such as, for example, as insertion or thread. Thus, in the embodiment shown at one of its ends it has a female recess (7.1) threaded in its interior, whilst at its other end it has a male projection (7.2) threaded externally.

Thanks to the fact that the connection means are complementary, several sections can be disposed consecutively until achieving the most convenient length of the connection arm (7).

With the object of being able to fix the connection arm (7), both on the fixing part (6) for fixing to a rod, and on a suction pad (5) for fixing to the electronic apparatus, they have complementary fixing means, which in the embodiment shown may be a threaded projection (6.1) for the fixing part (6) for fixing to a rod, and a threaded recess, not represented, for the suction pad (5) for fixing to the electronic apparatus.

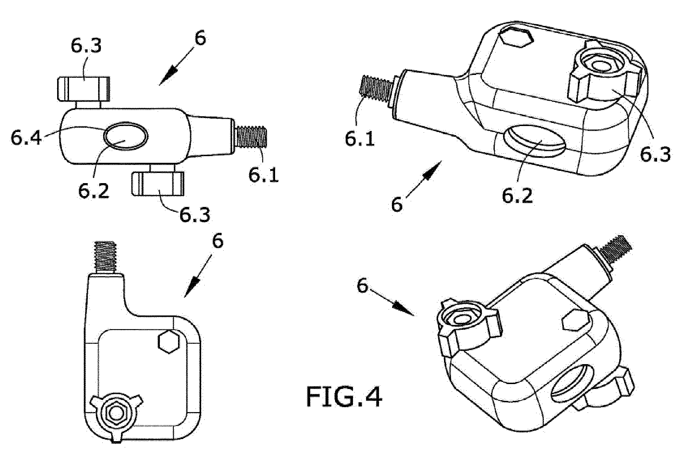

Figure 4 shows the construction characteristics of the fixing part (6) for fixing to a rod, which has:
- A through-perforation (6.2) of configurable free section.
- Displaceable means, which in a possible embodiment may be displaceable sheets (6.4) which modify the free section of the perforation (6.2).
- Clamping threads (6.3), which when rotated displace the displaceable sheets (6.4), modifying the free section and therefore tightening and fixing the securing part (6) on a rod.

Having sufficiently described the nature of the present invention, as well as the manner of putting it into practice, it is stated that, within is essential nature, it can be put into practice in other forms of embodiment that differ in details from those indicated by way of example, and whereto protection claimed will equally cover, provided that its main principle is not altered, changed or modified.

## Claims

1. Fixing device for the fixing in the interior of vehicles of mobile phones, electronic tablets, sat navs and other electronic apparatus, **characterized in that** it comprises:
- A first securing element for securing to an element or surface of the vehicle,
- A second fixing element for fixing to the electronic apparatus, the fixing element being preferably a suction pad.
- A connection arm which is fixed at its ends to the securing elements,
Where, both the first securing element and the second have a demountable connection in their joint with the connection arm having complementary fixing means and the first securing element can be replaced by a securing part for securing to a rod.

2. Fixing device for the fixing in headrests and the like of mobile phones, electronic tablets, sat navs and other electronic apparatus, according to claim 1, **characterized in that** the first securing element is a suction pad (1), whilst the second fixing element is a suction pad (5), both having vacuum-generating flanges (2) and (4) respectively.

3. Fixing device for the fixing in headrests and the like of mobile phones, electronic tablets, sat navs and other electronic apparatus, according to claim 1, **characterized in that** the first securing element is a fixing part (6) for fixing to a road, whilst the second fixing element is a suction pad (5) equipped with a flange (4).

4. Fixing device for the fixing in headrests and the like of mobile phones, electronic tablets, sat navs and other electronic apparatus, according to claim 1, **characterized in that** the complementary fixing means disposed on the connection arm (7) comprise at one end a female recess (7.1) threaded in its interior, whilst at its other end it has a male projection (7.2) threaded externally.

5. Fixing device for the fixing in headrests and the like of mobile phones, electronic tablets, sat navs and other electronic apparatus, according to claim 3, **characterized in that** there is a threaded projection (6.1) on the fixing part (6) for fixing to a rod, whilst in the fixing means for fixing to the electronic apparatus there is a threaded recess in its interior.

6. Fixing device for the fixing in headrests and the like of mobile phones, electronic tablets, sat navs and other electronic apparatus, according to claim 3 or 5, **characterized in that** the fixing part (6) for fixing to a rod, which has:
- A through-perforation (6.2) of configurable free section.
- Displaceable means, that modify the free section of the perforation (6.2)
- Clamping threads (6.3), which when rotated displace the displaceable means, modifying the free section and therefore tightening and fixing the securing part (6) on a rod.

7. Fixing device for the fixing in headrests and the like of mobile phones, electronic tablets, sat navs and other electronic apparatus, according to any of the preceding claims **characterized in that** the connection arm a deformable arm, adapting its position, and configurable adapting its length by the connection of several sections of arm.
